# EUROPÄISCHE PATENTSCHRIFT

(11) **EP 1 179 128 B1**
(45) Veröffentlichungstag und Bekanntmachung des Hinweises auf die Patenterteilung: **03.08.2005**
(21) Anmeldenummer: 01913658.9
(22) Anmeldetag: 16.02.2001
(51) Int. Cl.: F02B 37/24, F02D 33/02, F02B 37/18

(54) **VERFAHREN UND VORRICHTUNG ZUR REGELUNG DES LADEDRUCKS EINER BRENNKRAFTMASCHINE**
METHOD AND DEVICE FOR REGULATING THE BOOST PRESSURE OF AN INTERNAL COMBUSTION ENGINE
PROCEDE ET DISPOSITIF POUR REGULER LA PRESSION DE SURALIMENTATION D'UN MOTEUR A COMBUSTION INTERNE

(30) Priorität: 07.03.2000 DE 10010978
(43) Veröffentlichungstag der Anmeldung: 13.02.2002
(73) Patentinhaber: ROBERT BOSCH GMBH, 70442 Stuttgart (DE)
(72) Erfinder: ENGEL, Gerhard, 70469 Stuttgart (DE); BIRK, Manfred, 71739 Oberriexingen (DE); MEIER, Frank, 70806 Kornwestheim (DE); BLEILE, Thomas, 70435 Stuttgart (DE); RUPP, Peter, 71686 Remseck (DE); KRAEMER, Wolfgang, 70191 Stuttgart (DE)
(86) Internationale Anmeldenummer: PCT/DE2001/000586
(87) Internationale Veröffentlichungsnummer: WO 2001/066921

(56) Entgegenhaltungen:
- DE-A- 3 731 320
- DE-A- 19 808 832
- US-A- 5 850 737

## Beschreibung

### Stand der Technik

Die vorliegende Erfindung betrifft ein Verfahren und eine Vorrichtung zur Regelung des Ladedrucks einer Brennkraftmaschine mit einem Abgasturbolader, dessen im Abgaskanal der Brennkraftmaschine angeordnete Turbine eine veränderbare Geometrie aufweist, wobei die Regelung des Ladedrucks über eine Verstellung der Turbinengeometrie erfolgt.

Wie z. B. aus der DE 41 07 693 A1 oder der EP 04 54 943 A1 hervorgeht, erfolgt üblicherweise die Ladedruckregelung dadurch, daß ein Regler in Abhängigkeit von der Abweichung zwischen einem Soll-Ladedruck und einem Ist-Ladedruck eine Stellgröße bildet. Diese Stellgröße wird entweder dazu verwendet (s. DE 41 07 693 A1), ein Ventil in einem die Turbine des Laders im Abgaskanal überbrückenden Bypass oder die verstellbaren Turbinenleitschaufeln einer Turbine mit variabler Geometrie zu steuern (s. EP 04 54 943 A1).

Aus der DE 198 08 832 A1 ist ein Verfahren zur Regelung des Ladeluftmassenstroms einer aufgeladenen Brennkraftmaschine bekannt. Dabei führt eine Reglereinheit einen Ist-/Sollwert-Vergleich einer Regelgröße mit einem als Führungsgröße vorgegebenen Sollwert durch und erzeugt Stellsignale für einen Stellantrieb der Turbinengeometrie zum Angleich des Istwertes an den Sollwert. Als Regelgröße wird das Druckgefälle zwischen dem Ladedruck und einem auf die Turbine wirkenden Abgasdruck ermittelt. Die Reglereinheit bestimmt aus der Abweichung des Istwertes von dem Sollwert des Druckgefälles direkt eine angleichende Verstellung der Turbinengeometrie.

Aus der US 5,850,737 ist ein Verfahren zur Steuerung des Ladedruckes eines Abgasturboladers mit variabler Turbinengeometrie bekannt. Ein Fuzzy-Regler hat als Eingangsgrößen eine Steuerdifferenz und eine Steuermenge. Die Steuermenge ist als Differenz zwischen einem motorbetriebspunktabhängigen maximal zulässigen Differenzdruck und einem aktuellen Differenzdruck vorgegeben. Der Differenzdruck wird als Differenz zwischen einem Abgasgegendruck und dem Ladedruck berechnet, sodass nicht akzeptable Werte für den Abgasgegendruck erkannt werden im Falle eines positive Lastwechsels und durch Öffnen der Schaufelposition des Abgasturboladers mit der variablen Turbinengeometrie korrigiert wird, sodass eine optimale Bildung des Drehmoments erfolgen kann.

Aus der DE 37 31 320 A1 ist ein Steuersystem für einen Turbolader bekannt, der eine Turbinenleitschaufelanordnung mit verstellbarem Winkel aufweist, wobei die Kopplung der Auspuffgase an die Turbinenradschaufeln erhöht wird, wenn der Druck in einem stromaufwärts vom Turbolader liegenden Rohrteil des Auspuffrohres anwächst.

An Motoren werden zunehmend höhere Anforderungen bzgl. der Abgas- und Verbrauchskennwerte gestellt. Ein Abgasturbolader mit variabler Turbinengeometrie erlaubt durch Verstellen der Turbinenleitschaufeln eine Anpassung an den aktuellen Motorbetriebspunkt. Mit dieser Technik kann ein verzögertes Ansprechen des Abgasturboladers (Turboloch) verringert und gleichzeitig der Wirkungsgrad des Motors verbessert werden. Bei Beschleunigungsvorgängen treten oft starke Überschwinger des Ladedrucks auf, die den Turbolader mechanisch sehr stark belasten. Darüberhinaus kann ein zu starkes Schließen der variablen Turbinengeometrie in der Beschleunigungsphase zu einem unerwünscht hohen Abgasgegendruck führen, wodurch Dynamik und Wirkungsgrad des Motors negativ beeinflußt werden.

Der Erfindung liegt daher die Aufgabe zugrunde, ein Verfahren und eine Vorrichtung zur Ladedruckregelung der eingangs genannten Art anzugeben, welche gewährleisten, daß der Ladedruck bei einem Lastwechsel dem Verlauf des gewünschten Ladedrucksollwertes möglichst schnell folgt, wobei eine Überschreitung des Ladedrucksollwertes vermieden wird, um den Abgasturbolader vor unnötig hohen Belastungen zu schützen.

### Vorteile der Erfindung

Die genannte Aufgabe wird mit den Merkmalen der Ansprüche 1 und 3 dadurch gelöst, daß in Abhängigkeit von dem im Abgaskanal vor der Turbine herrschenden Abgasgegendruck eine Stellgröße für die Turbinengeometrie ermittelt wird. Der Abgasgegendruck reagiert erheblich schneller als der Ladedruck auf ein verändertes Verhalten der Regelstrecke - z. B. Drehzahländerung, Lastwechsel, Änderung einer Abgasrückführung - oder auf Störungen z. B. im Stellsystem. Wird nun erfindungsgemäß der Abgasgegendruck zur Herleitung einer Stellgröße verwendet, so erreicht man dadurch eine sehr schnelle Reaktion der Ladedruckregelung auf eine Veränderung des vorgegebenen Soll-Ladedrucks.

Eine vorteilhafte Weiterbildung des erfindungsgemäßen Verfahrens bzw. der erfindungsgemäßen Vorrichtung geht aus den Unteransprüchen hervor. Danach wird aus der Abweichung zwischen einem Soll-Ladedruck und einem Ist-Ladedruck von einem ersten Regler ein Soll-Abgasgegendruck ermittelt, und aus der Abweichung zwischen dem Soll-Abgasgegendruck und einem gemessenen oder geschätzten Ist-Abgasgegendruck wird von einem zweiten Regler die Stellgröße für die Turbinengeometrie hergeleitet.

### Zeichnung

Anhand eines in der Zeichnung dargestellten Ausführungsbeispiels wird nachfolgend die Erfindung näher erläutert. Es zeigen:
Figur 1 eine schematische Darstellung einer Brennkraftmaschine mit einem Abgasturbolader und
Figur 2 ein Funktionsdiagramm für die Regelung des Ladedrucks.

### Beschreibung eines Ausführungsbeispiels

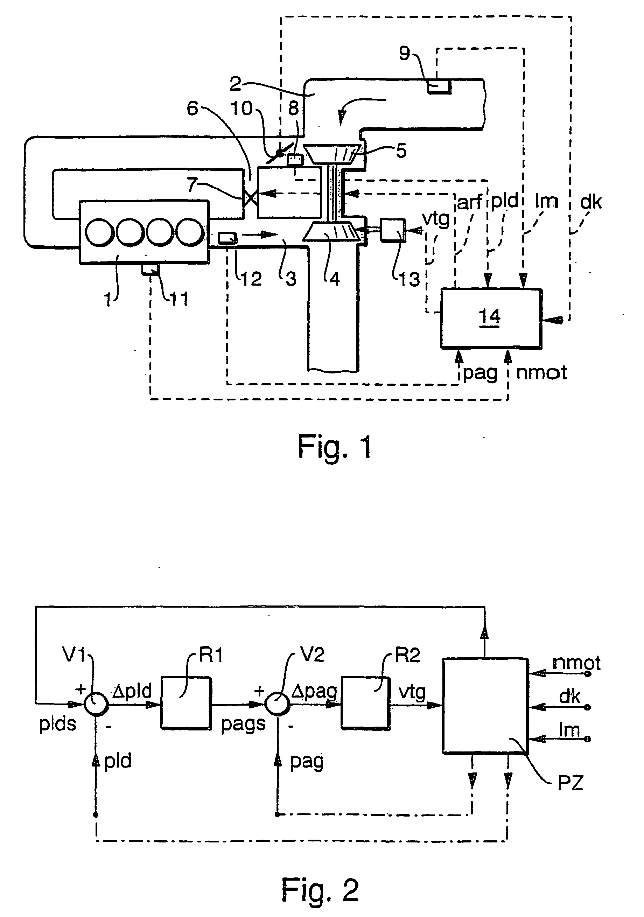

In der Figur 1 ist eine Brennkraftmaschine 1 mit einem Ansaugkanal 2 und einem Abgaskanal 3 dargestellt. Im Abgaskanal 3 ist die Turbine 4 und im Ansaugkanal 2 der Verdichter 5 eines Abgasturboladers angeordnet. Desweiteren kann die Brennkraftmaschine mit einem Abgasrückführkanal 6 augestattet sein, der den Abgaskanal 3 mit dem Saugrohr 2 verbindet. Im Abgasrückführkanal 6 befindet sich ein steuerbares Ventil 7. Im Saugrohr 2 sind ein Drucksensor 8 zur Messung des Ladedrucks pld und ein Luftmassensensor 9 zur Messung der angesaugten Luftmasse lm angeordnet. Außerdem befindet sich im Saugrohr eine Drosselklappe 10. Ein Sensor 11 erfaßt die Drehzahl mmot der Brennkraftmaschine, und ein Drucksensor 12 im Abgaskanal 3 mißt den Abgasgegendruck pag vor der Turbine 4. Es ist ein Steller 13 vorhanden, der auf die Turbinengeometrie einwirkt, d. h. eine Verstellung der Turbinenleitschaufeln vornimmt. Dieser Steller 13 erhält eine Stellgröße vtg aus einem Steuergerät 14. Zur Herleitung der Stellgröße vtg für die Turbinengeometrie und einer Stellgröße arf für das Abgasrückführventil verwendet das Steuergerät 14 als Eingangsgrößen die Motordrehzahl nmot, die Drosselklappenstellung dk, die angesaugte Luftmasse lm, den Ladedruck pld und den Abgasgegendruck pag.

Wie das Steuergerät 14 aus den genannten Eingangsgrößen die Stellgröße vtg für die Turbinengeometrie herleitet, wird anhand des Funktionsdiagramms in Figur 2 näher beschrieben. Ein Prozessor PZ ermittelt aus der Motordrehzahl nmot, der Drosselklappenstellung dk, welche den Fahrerwunsch wiedergibt, und noch eventuell anderen hier nicht erwähnten Betriebsgrößen des Motors einen Soll-Ladedruck plds. Auf die Herleitung des Soll-Ladedrucks plds wird hier nicht näher eingegangen, weil sie zum Stand der Technik gehört. In einem ersten Verknüpfungspunkt V1 wird die Abweichung Δpld zwischen dem Soll-Ladedruck plds und einem Ist-Ladedruck pld ermittelt. Der Abweichungwert Δpld für den Ladedruck wird einem ersten Regler R1 (z. B. PI oder PID-Regler) zugeführt. Die Ausgangsgröße des ersten Reglers R1 entspricht einem Sollwert pags des Abgasgegendrucks im Abgaskanal 3. In einem zweiten Verknüpfungspunkt V2 wird die Abweichung Δpag zwischen dem Soll-Abgasgegendruck pags und dem Ist-Abgasgegendruck pag bestimmt. Der Abweichungswert Δpag für den Abgasgegendruck wird einem zweiten Regler R2 zugeführt, der schließlich die Stellgröße vtg für die veränderbare Turbinengeometrie bildet.

Der Ist-Ladedruck pld kann entweder mittels des Drucksensors 8 im Saugrohr 2 gemessen werden, oder es kann ein Schätzwert für den Ist-Ladedruck vom Prozessor PZ aus verschiedenen Betriebsgrößen der Brennkraftmaschine hergeleitet werden. Die strichpunktierte Linie in der Figur 2 deutet an, daß der Ist-Ladedruck pld ein vom Prozessor PZ ermittelter Schätzwert ist. Der Ist-Abgasgegendruck pag kann ein Meßwert des Drucksensors 12 im Abgaskanal 3 sein. Für den Ist-Abgasgegendruck pag kann aber auch ein vom Prozessor PZ aus Betriebsgrößen der Brennkraftmaschine hergeleiteter Schätzwert sein. Die vom Prozessor PZ zum zweiten Verzweigungspunkt V2 führende strichpunktierte Linie deutet an, daß der Ist-Abgasgegendruck pag ein vom Prozessor PZ berechneter Schätzwert ist. Auf die Berechnung der Schätzwerte für den Ist-Solladedruck pld und den Ist-Abgasgegendruck pag wird hier nicht näher eingegangen, weil hier aus dem Stand der Technik bekannte Verfahren verwendet werden können.

Durch Schließen der Turbinengeometrie steigt der Abgasgegendruck pag im Abgaskanal 3 vor der Turbine 4 an und damit auch die in die Turbine 4 eingekoppelte Energie. Dadurch steigt die Laderdrehzahl und gleichzeitig auch der Ladedruck pld im Saugrohr 2. Falls eine Abgasrückführung, wie in der Figur 1 dargestellt, vorhanden ist, kann über den Abgasrückführkanal 6 durch Öffnen des Ventils 7 Abgas in das Saugrohr gelangen, wenn der Abgasgegendruck pag größer ist als der Ladedruck pld. Wird das Abgasrückführventil 7 geöffnet, so sinkt der Abgasgegendruck pag und dadurch ebenfalls der Ladedruck pld im Saugrohr 2.

Die Erfindung basiert auf der Beobachtung, daß der Abgasgegendruck pag wesentlich schneller auf eine Verstellung der Turbinengeometrie reagiert als der Ladedruck pld. Der Ladedruck pld spricht erst um die Zeitkonstante des Abgasturboladers verzögert an. Daher wird die Dynamik eines Reglers für den Ladedruck wesentlich durch das Trägheitsmoment des Abgasturboladers begrenzt. Die dabei auftretende Zeitkonstante ist jedoch wesentlich größer als die Zeitkonstante einiger Störungen, die durch das zeitvariante Verhalten der Regelstrecke, durch Öffnen und Schließen des Abgasrückführventils 7 oder durch Fehler im Leitapparat der Turbine 4 auf das System wirken. Störungen des Leitapparats der Turbine, Veränderungen des Ventilhubs, des Abgasrückführventils 7 oder Veränderungen des Arbeitspunktes der Brennkraftmaschine wirken sich sehr direkt auf den Abgasgegendruck pag aus und können daher in dem unterlagerten Regelkreis mit dem Regler R2 sehr schnell ausgeglichen werden. Der überlagerte Regelkreis mit dem Regler R1 muß langsamer ausgelegt werden als der unterlagerte Regelkreis mit dem Regler R2. Da der Ladedruck pld aber ohnehin träger ist als der Abgasgegendruck pag, wird diese Bedingung automatisch erfüllt.

## Patentansprüche

1. Verfahren zur Regelung des Ladedrucks einer Brennkraftmaschine mit einem Abgasturbolader, dessen im Abgaskanal (3) der Brennkraftmaschine (1) angeordnete Turbine (4) eine veränderbare Geometrie aufweist, wobei die Regelung des Ladedrucks über eine Verstellung der Turbinengeometrie erfolgt, wobei in Abhängigkeit von dem im Abgaskanal (3) vor der Turbine (4) herrschenden Abgasgegendruck (pag) eine Stellgröße (vtg) für die Turbinengeometrie ermittelt wird, **dadurch gekennzeichnet, dass** aus der Abweichung (Δpld) zwischen einem Soll-Ladedruck (plds) und einem Ist-Ladedruck (pld) von einem ersten Regler (R1) ein Soll-Abgasgegendruck (pags) ermittelt wird und dass aus der Abweichung (Δpag) zwischen dem Soll-Abgasgegendruck (pags) und einem gemessenen oder geschätzten Ist-Abgasgegendruck (pag) von einem zweiten Regler (R2) die Stellgröße (vdg) für die Turbinengeometrie hergeleitet wird.

2. Vorrichtung zur Regelung des Ladedrucks einer Brennkraftmaschine mit einem Abgasturbolader, dessen im Abgaskanal (3) der Brennkraftmaschine (1) angeordnete Turbine (4) eine veränderbare Geometrie aufweist, wobei die Regelung des Ladedrucks über eine Verstellung der Turbinengeometrie erfolgt, wobei ein Regler (R2) in Abhängigkeit von dem im Abgaskanal (3) vor der Turbine (4) herrschenden Abgasgegendruck (pag) eine Stellgröße (vtg) für die Turbinengeometrie bildet, **dadurch gekennzeichnet, dass** ein erster Regler (R1) aus der Abweichung (Δpld) zwischen einem Soll-Ladedruck (plds) und einem Ist-Ladedruck (pld) einen Soll-Abgasgegendruck (pags) ermittelt und dass ein zweiter Regler (R2) aus der Abweichung (Δpag) zwischen dem Soll-Abgasgegendruck (pags) und einem gemessenen oder geschätzten Ist-Abgasgegendruck (pag) die Stellgröße (vtg) für die Turbinengeometrie herleitet.

## Claims

1. Method for regulating the boost pressure of an internal combustion engine having an exhaust gas turbocharger whose turbine (4), arranged in the exhaust duct (3) of the internal combustion engine (1), has a variable geometry, wherein the boost pressure is regulated by adjusting the turbine geometry, wherein a manipulated variable (vtg) for the turbine geometry is determined as a function of the exhaust gas backpressure (pag) prevailing in the exhaust duct (3) upstream of the turbine (4), **characterized in that** a setpoint exhaust gas backpressure (pags) is determined by a first regulator (R1) from the deviation (Δpld) between a setpoint boost pressure (plds) and an actual boost pressure (pld), and **in that** the manipulated variable (vdg) for the turbine geometry is derived by a second regulator (R2) from the deviation (Δpag) between the setpoint exhaust gas backpressure (pags) and a measured or estimated actual exhaust gas backpressure (pag).

2. Device for regulating the boost pressure of an internal combustion engine having an exhaust gas turbocharger whose turbine (4), arranged in the exhaust duct (3) of the internal combustion engine (1), has a variable geometry, wherein the boost pressure is regulated by adjusting the turbine geometry, wherein a regulator (R2) forms a manipulated variable (vtg) for the turbine geometry as a function of the exhaust gas backpressure (pag) prevailing in the exhaust duct (3) upstream of the turbine (4), **characterized in that** a first regulator (R1) determines a setpoint exhaust gas backpressure (pags) from the deviation (Δpld) between a setpoint boost pressure (plds) and an actual boost pressure (pld), and **in that** a second regulator (R2) derives the manipulated variable (vtg) for the turbine geometry from the deviation (Δpag) between the setpoint exhaust gas backpressure (pags) and a measured or estimated actual exhaust gas backpressure (pag).

## Revendications

1. Procédé de régulation de la pression de suralimentation d'un moteur à combustion interne équipé d'un turbocompresseur sur gaz d'échappement dont la turbine (4) disposée dans la conduite de gaz d'échappement (3) du moteur à combustion interne (1) présente une géométrie variable, la régulation de la pression de suralimentation s'effectuant par le biais d'une modification de la géométrie de la turbine, en déterminant une grandeur réglante (vtg) pour la géométrie de la turbine en fonction de la contre-pression des gaz d'échappement (pag) qui règne dans la conduite de gaz d'échappement (3) en amont de la turbine (4),
**caractérisé en ce qu'**
une contre-pression des gaz d'échappement de consigne (pags) est déterminée par un premier régulateur (R1) sur la base de l'écart (Δpld) entre une pression de suralimentation de consigne (plds) et une pression de suralimentation réelle (pld), et la grandeur réglante (vdg) pour la géométrie de la turbine est déduite par un second régulateur (R2) sur la base de l'écart (Δpag) entre la contre-pression des gaz d'échappement de consigne (pags) et une contre-pression des gaz d'échappement réelle (pag) mesurée ou estimée.

2. Dispositif de régulation de la pression de suralimentation d'un moteur à combustion interne équipé d'un turbocompresseur sur gaz d'échappement dont la turbine (4) disposée dans la conduite de gaz d'échappement (3) du moteur à combustion interne (1) présente une géométrie variable, la régulation de la pression de suralimentation s'effectuant par le biais d'une modification de la géométrie de la turbine, dans lequel un régulateur (R2) forme une grandeur réglante (vtg) pour la géométrie de la turbine en fonction la contre-pression des gaz d'échappement (pag) qui règne dans la conduite de gaz d'échappement (3) en amont de la turbine (4),
**caractérisé en ce qu'**
un premier régulateur (R1) détermine une contre-pression des gaz d'échappement de consigne (pags) sur la base de l'écart (Δpld) entre une pression de suralimentation de consigne (plds) et une pression de suralimentation réelle (pld), et un second régulateur (R2) déduit la grandeur réglante (vdg) pour la géométrie de la turbine, sur la base de l'écart (Δpag) entre la contre-pression des gaz d'échappement de consigne (pags) et une contre-pression des gaz d'échappement réelle (pag) mesurée ou estimée.
